# FASCICULE DE BREVET EUROPEEN

(11) **EP 4 599 245 B1**
(45) Date de publication et mention de la délivrance du brevet: **11.11.2026**
(21) Numéro de dépôt: 23799010.6
(22) Date de dépôt: 28.09.2023
(51) Int. Cl.: G01N 29/44, G01N 29/48

(54) **PROCÉDÉ DE CARACTÉRISATION DE LA POROSITÉ D'UNE PLAQUE PAR BALAYAGE ULTRASONS À HAUTE RÉSOLUTION**
VERFAHREN ZUR CHARAKTERISIERUNG DER POROSITÄT EINER PLATTE MITTELS HOCHAUFLÖSENDER ULTRASCHALLABTASTUNG
METHOD FOR CHARACTERISING THE POROSITY OF A PLATE BY MEANS OF HIGH-RESOLUTION ULTRASOUND SCANNING

(30) Priorité: 04.10.2022 FR 2210157
(43) Date de publication de la demande: 13.08.2025
(73) Titulaire: Constellium Issoire, 63500 Issoire (FR)
(72) Inventeur: STOPPIGLIA, Hervé, 38240 MEYLAN (FR); PLANCHER, Emeric, 69510 MESSIMY (FR); DAIGUEBONNE, Lionel, 63730 PLAUZAT (FR)
(74) Mandataire: Constellium - Propriété Industrielle
(86) Numéro de dépôt international: PCT/FR2023/051500
(87) Numéro de publication internationale: WO 2024/074776

(56) Documents cités:
- FR-A1- 3 044 770
- US-A1- 2017 276 651

## Description

### DOMAINE TECHNIQUE

Le domaine technique de l'invention est la caractérisation de la porosité d'une plaque métallique, en particulier une plaque d'aluminium.

### ART ANTERIEUR

La porosité est un critère pris en compte lors du contrôle qualité d'une plaque métallique destinée à des applications particulières, par exemple l'aéronautique ou la construction.

A l'heure actuelle, la caractérisation de la porosité est effectuée en appliquant un colorant sur la plaque et en formant une image de cette dernière. Cette technique est désignée par l'acronyme DPI (Dye Penetrant Inspection Technique - technique d'inspection par imprégnation d'un colorant ou Ressuage). Le recours à une telle technique suppose l'élaboration d'une plaque dont la face exposée au colorant soit suffisamment lisse, de façon à pouvoir permettre l'obtention d'une image exploitable. Cela nécessite une préparation particulière, mettant en œuvre un polissage mécanique et/ou chimique. Une telle préparation est consommatrice de temps, d'autant plus qu'elle doit être effectuée avec soin, de façon à ne pas dégrader les pores débouchant de la face exposée au colorant. En outre, l'interprétation nécessite un opérateur expérimenté : le résultat de la caractérisation peut être « opérateur dépendant ». Des niveaux de dispersion élevés ont été constatés suite à l'inspection d'une même plaque par différents opérateurs. Une autre limite est l'incapacité à caractériser des pores fermés, ne débouchant pas sur la face recevant le colorant.

La technique de balayage acoustique par ultrasons constitue une alternative séduisante. Cette technique est décrite dans la publication Mas Fanny et al. « Development of new laboratory-scale tests to optimize industrial thermo-mechanical processing of thick plate products : Application to AlCuLi Alloys », Proceedings of the 16th International Aluminium Alloys Conference 2018. Il s'agit d'une technique non destructive, ne nécessitant pas de préparation spécifique, plus rapide à mettre en œuvre, et présentant une bonne répétabilité des mesures. En outre, un balayage acoustique peut être aisément automatisable. On comprend qu'il s'agit d'une méthode moins coûteuse et plus simple à mettre en œuvre.

FR3044770 divulgue un procédé de contrôle d'un objet par ultrasons, en appliquant une sonde ultrasonore multiéléments, comportant une pluralité de transducteurs élémentaires, contre l'objet. Le procédé comporte l'activation successive de transducteurs élémentaires, de telle sorte que lors de son activation, chaque transducteur émette une onde ultrasonore incidente vers ledit objet.

US2017/0276651 divulgue une sonde à ultrasons comprenant un transducteur pour transmettre et recevoir des ultrasons. La sonde comprend également un élément de couplage, tel qu'une bille sphérique en matériau autolubrifiant ou hydrogel, pour entrer en contact et se coupler acoustiquement à un objet à inspecter. La sonde à ultrasons comprend également un analyseur qui est agencé pour analyser le signal ultrasonore reçu par le transducteur et ainsi déterminer s'il existe un contact entre l'élément de couplage et la surface d'un objet. La sonde peut ainsi être utilisée pour l'inspection interne (ultrasonore) d'objets ainsi que pour mesurer la position de points sur la surface de l'objet. La sonde peut être montée sur une machine de mesure de coordonnées ou sur d'autres plates-formes mobiles.

Dans une même plaque, la forme et la taille des pores est variable. La seule détermination d'un nombre de pores par unité de surface peut être insuffisante pour caractériser une porosité. En effet, d'autres paramètres doivent être pris en compte, par exemple la taille, ou la forme. Les inventeurs ont développé un procédé de caractérisation d'une plaque par ultrasons, permettant de caractériser la porosité en prenant en compte différents paramètres. On aboutit à une caractérisation de la porosité plus raffinée qu'une simple détermination d'une densité de pores.

### EXPOSE DE L'INVENTION

L'objet de l'invention est un procédé de caractérisation d'une porosité d'une plaque en alliage d'aluminium, délimitée par une surface, le procédé comportant les étapes :
a) application d'une sonde face à la plaque, la sonde comportant au moins un transducteur configuré pour émettre une onde ultrasonore incidente vers la plaque et/ou à détecter une onde ultrasonore réfléchie dans la plaque ;
b) activation d'un transducteur de la sonde, dit transducteur d'émission, de façon que le transducteur d'émission émette une onde ultrasonore incidente vers la plaque ;
c) détection, par un transducteur de la sonde, dit transducteur de détection, d'un signal de détection représentatif d'une onde ultrasonore réfléchie par la plaque sous l'effet de l'onde incidente ;
d) répétition des étapes a) à c) en déplaçant le transducteur d'émission et le transducteur de détection le long de la surface de la plaque, selon un maillage définissant plusieurs points de maillage ;
e) à partir des signaux de détection détectés à chaque étape c), caractérisation de la porosité de la plaque ;
   - lors de chaque étape b), l'onde acoustique est focalisée, selon une profondeur de focalisation sous la surface de la plaque, de façon à converger jusqu'à une profondeur de focalisation, sous la surface, et diverger à partir de la profondeur de focalisation;
   - la profondeur de focalisation est comprise entre 4 mm et 12 mm.

L'application de la sonde face à la plaque n'implique pas que la plaque soit au contact de la sonde. Généralement, une épaisseur d'eau s'étend entre la sonde et la plaque.

Le transducteur d'émission et le transducteur de détection peuvent former un même transducteur.

L'étape e) comporte :
- e-i) prise en compte d'une amplitude minimale ;
- e-ii) sélection des signaux de détection dont l'amplitude est supérieure à l'amplitude minimale ;
- e-iii) détermination de la présence d'un défaut lorsque au moins un signal de détection, correspondant à un point du maillage, est sélectionné lors de la sous-étape e-ii).

La sous-étape e-iii) comporte une détermination de la présence d'un défaut lorsqu'au moins deux signaux de détection, correspondant à deux points de maillage adjacents, sont sélectionnés lors de la sous-étape e-ii).

Le procédé comporte :
- e-iv) calcul d'un indicateur de densité de porosité, correspondant à un nombre de défauts déterminés par unité de surface, en différents points du maillage ;
- e-v) éventuellement détermination d'un indicateur de densité de porosité global de la plaque en fonction des indicateurs de densité de porosité calculés lors de la sous-étape e-iv).

Le procédé peut comporter :
- e-vi) prise en compte d'un nombre de référence, supérieur à 2 ;
- e-vii) détermination de la présence d'un défaut critique de type 1 lorsque les signaux de détection correspondant à un nombre de points de maillage adjacents, supérieur ou égal au nombre de référence, sont sélectionnés lors de la sous-étape e-ii) ;
- e-viii) détermination d'un indicateur de porosité critique de type 1 en fonction du nombre de défauts critiques de type 1 résultant de la sous-étape e-vii).

L'étape e) peut comporter :
- e-ix) prise en compte d'une amplitude critique;
- e-x) sélection des signaux de détection dont l'amplitude est supérieure à l'amplitude critique ;
- e-xi) détermination de la présence d'un défaut critique de type 2 lorsque au moins un signal de détection correspondant à un point du maillage est sélectionné lors de la sous-étape ex) ;
- e-xii) détermination d'un indicateur de porosité critique de type 2 en fonction du nombre de défauts critiques de type 2 résultant de la sous-étape e-xi).

La sous-étape e-xi) peut comporter une détermination de la présence d'un défaut critique de type 2 lorsqu'au moins deux signaux de détection, correspondant à deux points de maillage adjacents, sont sélectionnés lors de la sous-étape e-x) .

Le procédé peut comporter une détermination d'une conformité de la pièce en fonction :
- des indicateurs de densité de porosité résultant de la sous-étape e-iv) ou de l'indicateur de densité de porosité global résultant de la sous-étape e-v) ;
- et/ou de l'indicateur de porosité critique de type 1 résultant de la sous-étape e-viii) ;
- et/ou de l'indicateur de porosité critique de type 2 résultant de la sous-étape e-xii). L'amplitude critique, prise en compte lors de l'étape e-ix) est généralement supérieure à l'amplitude minimale prise en compte lors de l'étape e-i).

Le diamètre du transducteur peut être compris entre 100 µm et 500 µm.

La fréquence de l'onde incidente peut être comprise entre 10 MHz et 20 MHz.

La profondeur de focalisation peut être comprise entre 4 et 8 mm, et encore de préférence entre 5 et 7 mm.

Le maillage est de préférence bidimensionnel.

L'invention sera mieux comprise à la lecture de l'exposé des exemples de réalisation présentés, dans la suite de la description, en lien avec les figures listées ci-dessous.

### FIGURES

La figure 1A schématise un transducteur acoustique ultrasonore émettant une onde acoustique dans de l'eau.
La figure 1B montre le transducteur disposé face à une plaque à contrôler, une épaisseur d'eau subsistant entre la plaque et le transducteur.
La figure 2 schématise les principales étapes de mise en œuvre d'un procédé de caractérisation de la porosité d'une plaque.
La figure 3 représente une performance de détection des défauts par le procédé décrit en lien avec la figure 2.
La figure 4 regroupe les figures 4A, 4B et 4C. La figure 4A montre une distribution spatiale de l'intensité d'ondes réfléchies dans un plan parallèle à l'épaisseur d'une plaque. La figure 4B montre un défaut critique de type 2. La figure 4C montre un défaut critique de type 1.
La figure 5 montre une distribution spatiale de l'intensité d'ondes réfléchies dans un plan parallèle à l'épaisseur d'une plaque.
La figure 6 est identique à la figure 5. On a identifié une surface unitaire de 1 pouce x 1 pouce.
La figure 7 montre une identification de défauts critiques de type 1 et de type 2 sur la distribution spatiale de la figure 5.
Les figures 8A et 8B sont une comparaison entre une méthode de l'art antérieur (DPI) (figure 8A) la méthode objet de l'invention (figure 8B) et en terme de dispersion de mesures.

### EXPOSE DE MODES DE REALISATION PARTICULIERS

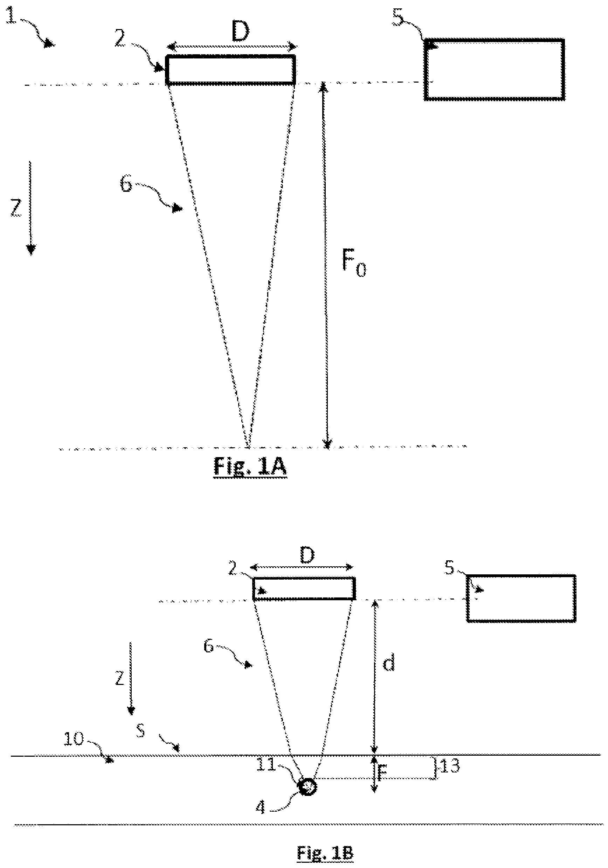

La figure 1A représente une sonde ultrasonore 1, destinée à l'inspection d'un objet, par exemple une pièce métallique telle une plaque d'aluminium. Il peut par exemple s'agir d'une plaque d'un alliage de type 2XXX ou 7XXX. La sonde ultrasonore comporte un transducteur 2, configuré pour émettre et recevoir une onde acoustique ultrasonore. Dans cet exemple, le transducteur agit à la fois en tant que transducteur d'émission et transducteur de réception. Selon une autre possibilité, la sonde comporte un transducteur d'émission et un transducteur de réception différents l'un de l'autre.

Le transducteur 2 est un transducteur à focalisation sphérique, ce qui constitue un mode de réalisation préféré. Il est configuré pour focaliser l'onde acoustique à une distance focale du transducteur d'émission. Sur la figure 1A, on a représenté le transducteur à focalisation sphérique, immergé dans de l'eau 6. L'onde acoustique est focalisée en un point, à une distance focale F₀ du transducteur 2. La distance focale F₀ peut par exemple être de 50 mm. Il s'agit d'une distance focale dans l'eau.

D'autres types de focalisation sont envisageables, par exemple une focalisation cylindrique, selon laquelle l'onde acoustique est focalisée selon une ligne.

Sur la figure 1B, on a représenté le transducteur immergé dans de l'eau 6, et s'étendant à une distance d = 25 mm d'une plaque d'alliage d'aluminium 10 à contrôler. Du fait des différences de propriétés acoustiques entre l'eau et l'alliage d'aluminium, l'onde acoustique est focalisée à une profondeur de focalisation F de 6 mm sous la surface S délimitant la plaque 10. A la profondeur de focalisation F, l'étendue spatiale de l'onde ultrasonore émise par le transducteur est minimale. De préférence, la profondeur de focalisation, sous la surface de la plaque, est comprise entre 4 et 12 mm, et de préférence entre 4 mm et 8 mm et encore de préférence 5 et 7 mm. Autour de la profondeur de focalisation, le faisceau acoustique forme une zone focalisée 4, qui s'étend sur largeur d'environ 2 mm parallèlement à l'épaisseur de la plaque, c'est-à-dire parallèlement à un axe Z perpendiculaire à la surface de la plaque. L'onde acoustique converge jusqu'à la zone focalisée, puis diverge au-delà de cette dernière. Par zone focalisée, on entend une couche, s'étendant de part et d'autre de la distance focale, dans laquelle on considère que le faisceau est suffisamment focalisé. Quel que soit le transducteur utilisé, la distance, dans l'eau, entre le transducteur et la plaque est agencée de façon à obtenir une profondeur de focalisation telle que précédemment décrite.

Le transducteur est par exemple une pastille de matériau piézoélectrique de diamètre D de 0.5 pouce et émettant une onde acoustique à une fréquence de 15 MHz. D'une façon générale, la fréquence de l'onde acoustique émise est préférentiellement comprise entre 10 MHz et 20 MHz.

Lorsque la pièce comporte un défaut 11, ou une autre interface, une partie de l'onde acoustique incidente est réfléchie, formant une onde acoustique réfléchie. L'onde acoustique réfléchie est détectée par le transducteur. Les caractéristiques de l'onde réfléchie, en particulier le temps de vol entre l'émission de l'onde incidente et la détection l'onde réfléchie, permet de localiser, en profondeur, le défaut ou, de façon plus générale, l'interface à l'origine de la formation de l'onde réfléchie. L'intensité de l'onde réfléchie peut également être exploitée pour caractériser le défaut, comme décrit par la suite.

Comme précédemment indiqué, un indicateur de qualité de plaques d'aluminium est un niveau de porosité, ce dernier faisant l'objet de spécifications.

Les premiers millimètres en dessous de la surface S constituent une zone morte 13, difficile à caractériser par une modalité ultrasonore. Cette zone morte est propice à la formation d'échos parasites gênant l'interprétation du signal mesuré. Aussi, on considère qu'il n'est pas optimal que la zone focalisée 4 de l'onde ultrasonore soit à moins de 4 ou 5 mm de la surface S de la plaque. De façon avantageuse, la profondeur de focalisation s'étend entre 4 et 8 mm de la surface S de la plaque, et de préférence entre 5 mm et 7 mm de la surface S. La profondeur de focalisation est avantageusement déterminée de façon à être la plus proche possible de la zone morte, de façon à limiter l'atténuation du faisceau ultrasonore dans la plaque, entre la zone morte et la zone focalisée 4.

Le diamètre du faisceau ultrasonore, à la distance focale F, est de préférence compris entre 100 µm et 500 µm. Le diamètre du faisceau ultrasonore définit la taille minimale d'un défaut à caractériser. Par défaut, on entend ici une inclusion creuse 11, formant la porosité. Le recours à un diamètre plus faible diminue la taille minimale d'un défaut à caractériser. Le diamètre du faisceau ultrasonore conditionne l'épaisseur de la zone focalisée 4 : un diamètre compris entre 100 µm et 500 µm permet d'obtenir une épaisseur de la zone focalisée de l'ordre de 2 mm.

Si la distance focale est choisie égale à 6 mm, cela permet de détecter des défauts dans une zone focalisée 4 s'étendant entre 5 et 7 mm en dessous de la surface S. Un diamètre plus court de faisceau réduit l'épaisseur de la zone focale : cela réduit le nombre de défauts susceptibles d'être détectés.

D'une façon générale, la fréquence de l'onde ultrasonore est comprise entre 10 MHz et 20 MHz.

Le transducteur est déplacé selon des points de maillage définis par un maillage spatial de préférence bidimensionnel, de préférence régulier, établi sur la surface S. Le pas entre deux points de maillage adjacents est déterminé en fonction du rayon du faisceau dans la zone de focalisation. Il peut par exemple s'agir du rayon multiplié par V2. Cela permet un recouvrement suffisant entre deux mesures adjacentes. Outre une épaisseur appropriée de la zone de focalisation, la taille de faisceau comprise entre 100 µm et 500 µm permet d'obtenir un nombre raisonnable de points de maillage. On obtient ainsi un compromis entre la précision (taille minimale d'un défaut à observer) et la vitesse de mesure, c'est-à-dire la durée de balayage du transducteur sur l'ensemble des points de maillage.

Le transducteur 2 est relié à une unité de traitement 5, programmée pour recevoir le signal de détection du transducteur et effectuer des opérations de traitement permettant l'établissement d'indicateurs de porosité décrits ci-après. L'unité de traitement est par exemple un microprocesseur relié à une mémoire comportant des instructions permettant la mise en œuvre desdites opérations de traitement.

L'unité de traitement est configurée de façon à sélectionner les signaux de détection détectés dans une porte temporelle prédéfinie, correspondant à la zone focalisée, c'est-à-dire de l'ordre de 1 mm de part et d'autre de la profondeur de focalisation.

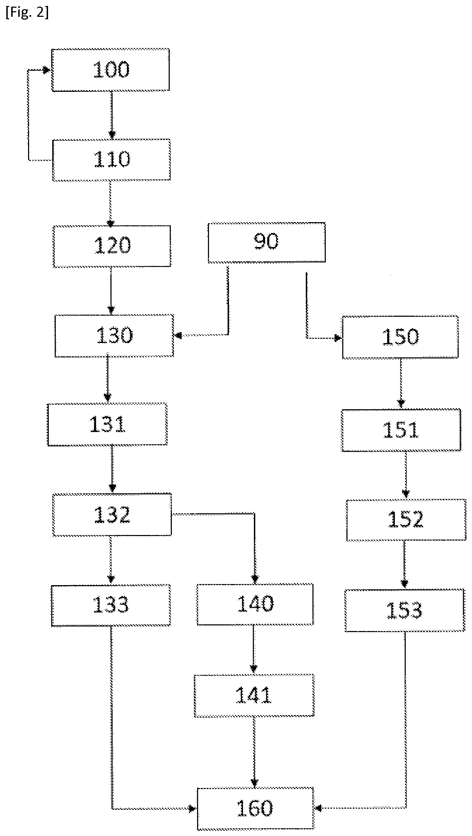

La figure 2 schématise les principales étapes d'un procédé de caractérisation de la porosité d'une plaque. Au cours d'une étape 100, le transducteur disposé face à la surface S de la plaque, une couche d'eau étant interposée entre la plaque et le transducteur. Au cours d'une étape 110, un balayage du transducteur est effectué, de façon à couvrir les différents points du maillage. Chaque point du maillage correspond à un point de mesure.

Les signaux de détection résultant du transducteur sont transmis à l'unité de traitement 5, de façon à déterminer, en chaque point de maillage, une intensité de l'onde réfléchie. L'unité de traitement 5 est également programmée pour mettre en œuvre les étapes décrites par la suite.

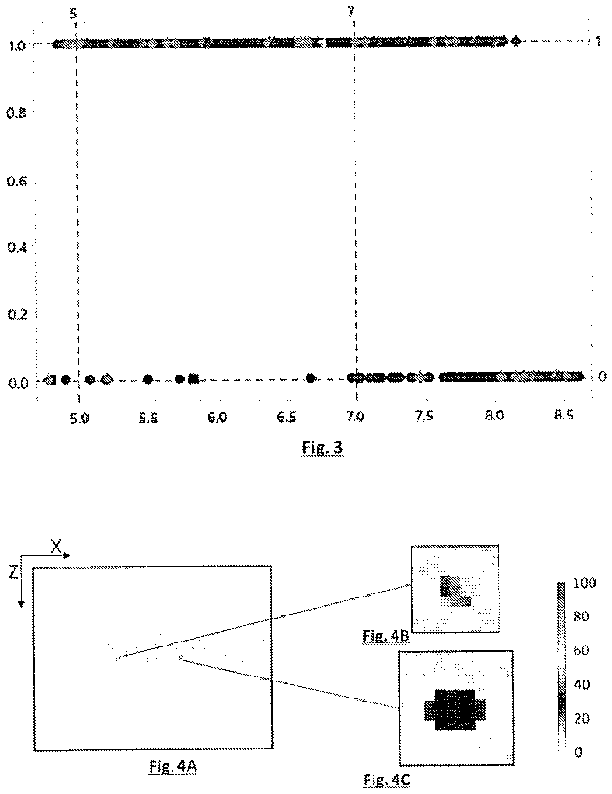

Au cours d'une étape 120, on procède à l'interprétation des mesures, visant à déterminer, en chaque point de maillage, la présence d'un défaut. Des paramètres de mesure sont associés à chaque point de maillage, par exemple l'amplitude du signal détecté, qui traduit l'amplitude de l'onde acoustique réfléchie. On peut ainsi obtenir une distribution spatiale de l'intensité de l'onde réfléchie au niveau de chaque point de mesure. Une telle distribution spatiale est illustrée sur les figures 4A, 5, 6 et 7.

Au cours d'une étape 130, on prend en compte une amplitude minimale du signal de détection. L'amplitude minimale peut être prédéfinie, par exemple au cours d'une phase d'étalonnage. L'étalonnage consiste à établir l'amplitude minimale à partir d'une pièce représentative de la pièce examinée, et comportant des défauts dont les dimensions sont connues. Dans la figure 2, l'étalonnage correspond à la phase 90. Par exemple, l'étalonnage consiste à déterminer une amplitude nominale, correspondant à un défaut nominal de dimension connue. L'amplitude minimale est alors déterminée en fonction de l'amplitude nominale. Il peut par exemple s'agir de 20 % de l'amplitude nominale.

Selon une possibilité, l'amplitude minimale est établie à partir d'une distribution statistique des amplitudes des signaux détectés : il peut par exemple s'agir d'un fractile, par exemple le fractile à 20 % ou d'une amplitude supérieure à un certain pourcentage de l'amplitude maximale des signaux de détection détectés durant la phase d'étalonnage.

Au cours d'une étape 131, on sélectionne les signaux de détection dont l'amplitude est supérieure à l'amplitude minimale prise en compte lors de l'étape 130.

Au cours d'une étape 132, lorsque au moins un signal de détection ou au moins deux signaux de détection, respectivement obtenus sur au moins un point de maillage ou au moins deux points de maillage adjacents, ont une amplitude supérieure à l'amplitude minimale, on établit la présence d'un défaut au niveau desdits points de maillage.

Au cours d'une étape 133, on établit un indicateur de densité de porosité, qui correspond au nombre de défauts identifiés lors de l'étape 132 pour une surface prédéterminée, par exemple 1 pouce par 1 pouce. L'indicateur de densité de porosité peut être établi en différentes zones contigües de la plaque. L'indicateur de densité de porosité constitue un premier critère de qualité de la plaque. On peut établir un indicateur de densité de porosité global pour l'ensemble de la plaque : il s'agit par exemple de l'indicateur de porosité maximal mesuré en différentes zones ou d'une moyenne d'indicateurs de porosité respectivement obtenus sur différentes zones de la plaque.

Au cours d'une étape 140, on prend en compte un nombre de référence prédéterminé. Le nombre de référence peut par exemple être égal à 16. Parmi les défauts identifiés lors de l'étape 132, on sélectionne les défauts s'étendant le long d'un nombre de points de maillage adjacents supérieur ou égal au nombre de référence. Ces défauts correspondent à des défauts critiques de type 1. Cela correspond à des signaux de détection mesurés sur au moins 16 points de maillage adjacents, dont l'intensité dépasse l'amplitude minimale prise en compte dans l'étape 130. Un défaut critique de type 1 correspond ainsi à un défaut s'étendant, de façon continue, sur au moins 16 points du maillage adjacents. On adresse ici des défauts spatialement étendus.

Au cours d'une étape 141, on établit un indicateur de porosité critique de type 1, qui correspond au nombre de défauts critiques de type 1 identifiés lors de l'étape 140 pour une surface prédéterminée, par exemple 1 pouce par 1 pouce. L'indicateur de porosité critique de type 1 peut être établi en différentes zones contigües de la plaque. L'indicateur de porosité critique de type 1 constitue un deuxième critère de qualité de la plaque.

Au cours d'une étape 150, on prend en compte une amplitude critique, représentative d'une présence d'un défaut critique. L'amplitude critique peut être prédéfinie, au cours de la phase d'étalonnage 90. L'étalonnage consiste à établir l'amplitude critique à partir d'une pièce représentative de la pièce examinée, et comportant des défauts dont les dimensions sont connues et sont considérées comme critiques. L'amplitude critique est alors déterminée en fonction de l'amplitude nominale précédemment décrite. Il peut par exemple s'agir de 80 % de l'amplitude nominale.

Selon une possibilité, l'amplitude critique est établie à partir d'une distribution statistique des amplitudes des signaux détectés : il peut par exemple s'agir d'un fractile, par exemple le fractile à 80 % ou d'une amplitude supérieure à un certain pourcentage, par exemple 80%, de l'amplitude maximale des signaux de détection détectés durant la phase d'étalonnage.

Au cours d'une étape 151, on sélectionne, parmi les signaux de détection, ceux dont l'amplitude est supérieure à l'amplitude critique.

Au cours d'une étape 152, lorsque au moins un signal de détection, obtenu sur un point de mesure d'un défaut, a une amplitude supérieure à l'amplitude critique, on établit la présence d'un défaut critique de type 2 au niveau desdits points de mesure. Selon une possibilité, un défaut critique de type 2 correspond à deux signaux de détection, respectivement obtenus sur deux points de mesure adjacents, ayant une amplitude supérieure à l'amplitude critique.

Au cours d'une étape 153, on établit un indicateur de porosité critique de type 2, qui correspond au nombre de défauts identifiés lors de l'étape 152 pour une surface prédéterminée, par exemple 1 pouce par 1 pouce. L'indicateur de porosité critique de type 2 peut être établi en différentes zones contigües de la plaque. Un défaut critique de type 2 correspond ainsi à un défaut particulièrement échogène, sous l'effet d'une brusque variation de l'impédance acoustique. L'indicateur de porosité critique de type 2 constitue un troisième critère de qualité de la plaque.

Au cours d'une étape 160, on détermine un niveau de conformité de la pièce, à partir d'au moins un des indicateurs précédemment définis :
- Indicateur de densité de porosité résultant de l'étape 133 ou indicateur de densité de porosité globale ;
- Indicateur de porosité critique de type 1 résultant de l'étape 141 ;
- Indicateur de porosité critique de type 2 résultant de l'étape 153.

Le niveau de conformité peut combiner les dits indicateurs. Il peut également s'agir d'un vecteur, dont chaque terme correspond à l'un des indicateurs listés ci-dessus.

Le niveau de conformité peut ensuite être comparé à un niveau de conformité de référence préalablement établi, qui définit les valeurs acceptables de chaque indicateur. En fonction de la comparaison, la pièce 10 est déclarée conforme ou non conforme. La comparaison n'est pas forcément effectuée par l'unité de traitement. Elle peut être effectuée par un opérateur.

Selon une possibilité, le niveau de conformité peut permettre d'affecter la pièce à une utilisation particulière parmi différentes utilisations existantes, à chaque utilisation étant associée une norme d'acceptation. Plusieurs niveaux de conformités peuvent être définis, correspondant respectivement à chaque utilisation. La pièce est alors orientée vers l'utilisation pour laquelle elle satisfait au niveau de conformité requis.

Selon une variante, le procédé comporte la détermination d'un seul critère ou de deux critères uniquement parmi les trois critères préalablement définis. Autrement dit, le procédé peut ne pas comporter la détermination des trois critères de porosité respectivement définis aux étapes 133, 141 et 153.

Un essai a été réalisé selon les paramètres expérimentaux suivants :
- Transducteur : Diamètre 0.5 pouces - fréquence 15 MHz - distance focale sous eau de 2 pouces.
- Water path (épaisseur d'eau, ou colonne d'eau) : 25.2 mm ;
- Pas entre chaque mesure : 0.28 mm ;
- Pièce contrôlée : échantillon d'une plaque d'alliage d'aluminium de type 7040 après laminage ;
- Porte temporelle fixée de façon à analyser les signaux réfléchis depuis une profondeur comprise entre 5 mm et 7 mm.

L'échantillon examiné a été analysé par une méthode de référence, par tomographie aux rayons X, de façon à obtenir une caractérisation tridimensionnelle des pores. La résolution spatiale de la méthode de référence est de 30 µm. On a constaté que 95% des pores détectés par tomographie l'étaient également par le contrôle ultrasonique. La figure 3 montre le nombre de pores détectés en fonction de la profondeur.

L'axe des abscisses correspond à la profondeur dans la plaque. L'axe des ordonnées quantifie la bonne détection d'un pore : la valeur est de 1 lorsqu'un pore est détecté (vrai positif) et 0 lorsqu'un pore n'est pas détecté alors qu'il est détecté par la méthode de référence (faux négatif). Le ratio de pores convenablement détectés est de 95%.

La figure 4A montre une vue en coupe de la plaque, dans un plan XZ, parallèle à l'épaisseur de la plaque, Z correspondant à l'épaisseur de la plaque. Il s'agit d'une distribution spatiale, dans le plan de coupe, de l'intensité de signaux de détection. Chaque point correspond à un pore. Les pores sont identifiés dans la zone correspondant à une épaisseur de la plaque comprise entre 5 mm et 7 mm. La figure 4B est un détail d'un pore critique de type 2 : signal réfléchi intense sur au moins deux points adjacents (i-e 2 pixels de l'image). La figure 4C est un détail d'un pore critique de type 1 : pore étendu spatialement, sur au moins 16 points adjacents (i-e 16 pixels de l'image). Le niveau de gris correspond à l'intensité du signal réfléchi.

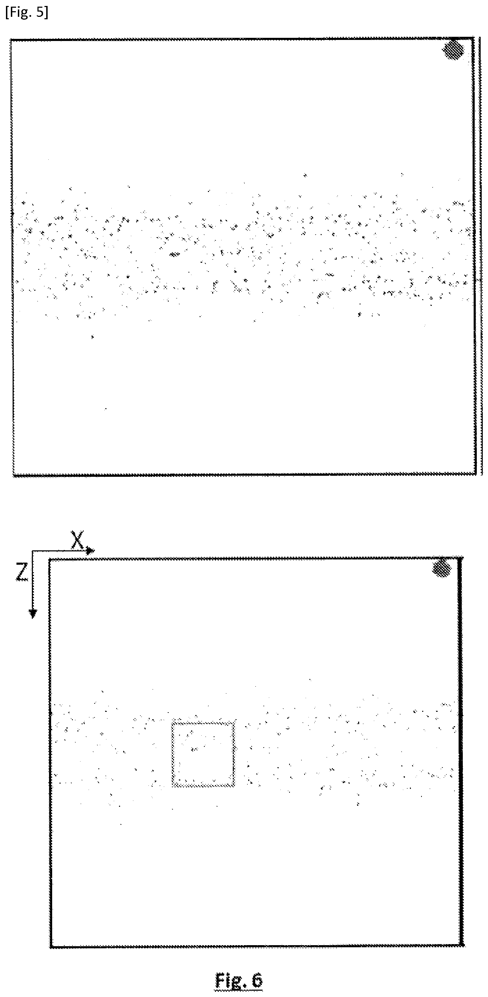

La figure 5 montre un exemple de caractérisation d'une autre plaque ayant fait l'objet d'une dégradation de façon à augmenter la porosité.

La figure 6 montre la plaque imagée sur la figure 5. Sur la figure 6, on a tracé un cadre matérialisant une surface unitaire de 1 pouce par 1 pouce. On dénombre 43 défauts dans la surface unitaire. Cela correspond à l'indicateur de densité de porosité défini en lien avec l'étape 133.

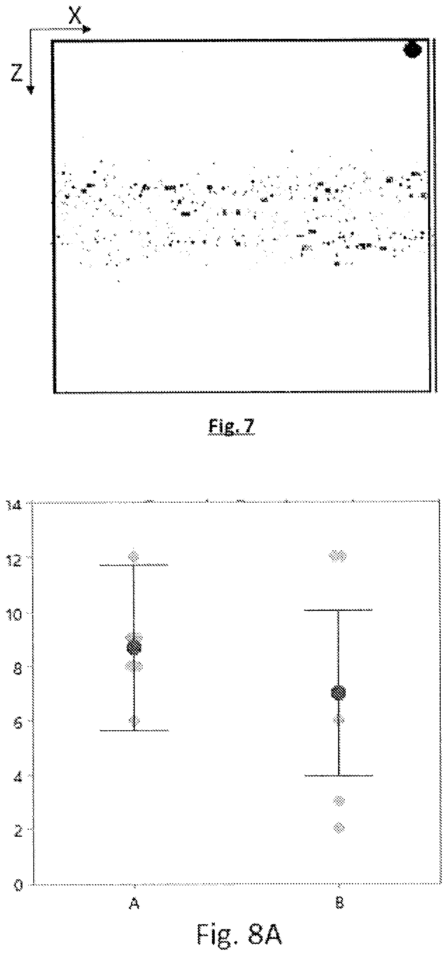

La figure 7 montre un autre exemple de caractérisation de la plaque imagée sur la figure 5. Sur la figure 7, on a encadré les défauts critique de type 1 et les défauts critiques de type 2. On dénombre 21 défauts critiques de type 1 et 37 défauts critiques de type 2.

On a effectué des essais comparatifs sur un échantillon A et un échantillon B en alliage d'aluminium. Chaque échantillon a été caractérisé plusieurs fois par ultrasons et par DPI selon 6 profondeurs différentes. Pour chaque échantillon, on a déterminé l'écart type des mesures.

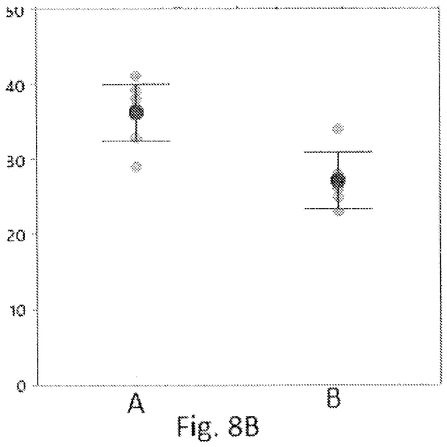

La figure 8A est une représentation de type graphique des intervalles (intervalplot) des mesures effectuées pour l'échantillon A et l'échantillon B par DPI. Sur chaque figure, l'axe des ordonnées correspond au nombre maximal de défauts identifiés sur une surface de 1 pouce par 1 pouce. On a également représenté un intervalle de confiance à 95%. La figure 8B est une représentation analogue en considérant les mesures effectuées par ultrasons. On observe que les mesures sont moins dispersées en utilisant la méthode de contrôle par ultrasons. Sur chaque plaque, le nombre de défauts détectés par contrôle ultrasons est supérieur au nombre de défauts détectés par DPI. Cela provient du fait que la méthode de contrôle par ultrasons adresse un volume s'étendant de part et d'autre de la profondeur de focalisation. Et cela contrairement à la méthode DPI, qui est une méthode adressant une surface.

L'invention pourra être mise en œuvre pour le contrôle de pièces métalliques, en particulier des plaques, afin de vérifier leur conformité à l'égard de spécifications d'acceptabilité. Outre une mise en œuvre rapide, et non invasive, l'invention permet d'établir des catégories de défauts, par exemple les défauts critiques de type 1 et les défauts critiques de type 2, ce que ne permet pas la méthode DPI de l'art antérieur.

Dans un mode de réalisation préféré, le procédé est mis en œuvre à l'aide d'un dispositif comprenant une sonde ultrasonore, comportant au moins un transducteur, configuré pour émettre une onde ultrasonore focalisée vers un objet et/ou pour détecter une onde ultrasonore réfléchie par l'objet, et une unité de traitement. La sonde est reliée à l'unité de traitement qui est configurée pour mettre en œuvre :
- les étapes e-i) à e-iv) ou e-i) à e-v) du procédé;
- et/ou les étapes e-vi) à e-viii) du procédé;
- et/ou les étapes e-ix) à e-xii) du procédé.

## Revendications

1. Procédé de caractérisation d'une porosité d'une plaque en alliage d'aluminium, délimitée par une surface, le procédé comportant les étapes :
a) application d'une sonde (1) face à la plaque (10), la sonde comportant au moins un transducteur (2) configuré pour émettre une onde ultrasonore incidente vers la plaque et détecter une onde ultrasonore réfléchie dans la plaque ;
b) activation d'un transducteur de la sonde, dit transducteur d'émission (2), de façon que le transducteur d'émission émette une onde ultrasonore incidente vers la plaque ;
c) détection, par un transducteur de la sonde, dit transducteur de détection (2), d'un signal de détection représentatif d'une onde ultrasonore réfléchie par la plaque sous l'effet de l'onde incidente ;
d) répétition des étapes a) à c) en déplaçant le transducteur d'émission (2) et le transducteur de détection (2) le long de la surface de la plaque, selon un maillage définissant plusieurs points de maillage ;
e) à partir des signaux de détection détectés à chaque étape c), caractérisation de la porosité de la plaque (10) ;
- lors de chaque étape b), l'onde acoustique est focalisée (4) , selon une profondeur de focalisation sous la surface de la plaque, de façon à converger jusqu'à une profondeur de focalisation, sous la surface, et diverger à partir de la profondeur de focalisation; la profondeur de focalisation est comprise entre 4 mm et 12 mm
le procédé étant **caractérisé en ce que** l'étape e) comporte :
- e-i) prise en compte d'une amplitude minimale ;
- e-ii) sélection des signaux de détection dont l'amplitude est supérieure à l'amplitude minimale ;
- e-iii) détermination de la présence d'un défaut (11) lorsque au moins un signal de détection, correspondant à un point du maillage, est sélectionné lors de la sous-étape e-ii), et dans lequel la sous-étape e-iii) comporte une détermination de la présence d'un défaut lorsqu'au moins deux signaux de détection, correspondant à deux points de maillage adjacents, sont sélectionnés lors de la sous-étape e-ii).
- e-iv) en différents points du maillage, calcul d'un indicateur de densité de porosité, correspondant à un nombre de défauts déterminés par unité de surface ;
- e-v) éventuellement détermination d'un indicateur de densité de porosité global de la plaque en fonction des indicateurs de densité de porosité calculés lors de la sous-étape e-iv).

2. Procédé selon la revendication 1, dans lequel le transducteur d'émission et le transducteur de détection forment un même transducteur.

3. Procédé selon la revendication 1 ou 2, comportant :
- e-vi) prise en compte d'un nombre de référence, supérieur à 2 ;
- e-vii) détermination de la présence d'un défaut critique de type 1 lorsque les signaux de détection correspondant à un nombre de points de maillage adjacents, supérieur ou égal au nombre de référence, sont sélectionnés lors de la sous-étape e-ii) ;
- e-viii) détermination d'un indicateur de porosité critique de type 1 en fonction du nombre de défauts critiques de type 1 résultant de la sous-étape e-vii).

4. Procédé selon l'une quelconque des revendications précédentes, dans lequel l'étape e) comporte :
- e-ix) prise en compte d'une amplitude critique ;
- e-x) sélection des signaux de détection dont l'amplitude est supérieure à l'amplitude critique ;
- e-xi) détermination de la présence d'un défaut critique de type 2 lorsque au moins un signal de détection correspondant à un point du maillage est sélectionné lors de la sous-étape e-x) ;
- e-xii) détermination d'un indicateur de porosité critique de type 2 en fonction du nombre de défauts critiques de type 2 résultant de la sous-étape e-xi).

5. Procédé selon la revendication 4, dans lequel la sous-étape e-xi) comporte une détermination de la présence d'un défaut critique de type 2 lorsqu'au moins deux signaux de détection, correspondant à deux points de maillage adjacents, sont sélectionnés lors de la sous-étape e-x).

6. Procédé selon les revendications 1 et 3 et 4, comportant une détermination d'une conformité de la pièce en fonction :
- des indicateurs de densité de porosité résultant de la sous-étape e-iv) ou de l'indicateur de densité de porosité global résultant de la sous-étape e-v) ;
- et/ou de l'indicateur de porosité critique de type 1 résultant de la sous-étape e-viii) ;
- et/ou de l'indicateur de porosité critique de type 2 résultant de la sous-étape e-xii).

7. Procédé selon l'une quelconque des revendications 4 à 6, dans lequel l'amplitude critique, prise en compte lors de l'étape e-ix) est supérieure à l'amplitude minimale prise en compte lors de l'étape e-i).

8. Procédé selon l'une quelconque des revendications précédentes, dans lequel le diamètre du transducteur est compris entre 100 µm et 500 µm.

9. Procédé selon l'une quelconque des revendications précédentes, dans lequel la fréquence de l'onde incidente est comprise entre 10 MHz et 20 MHz.

10. Procédé selon l'une quelconque des revendications précédentes, dans lequel la profondeur de focalisation est comprise entre 4 et 8 mm, et encore de préférence entre 5 et 7 mm.

11. Procédé selon l'une quelconque des revendications précédentes dans lequel le maillage est bidimensionnel.

## Patentansprüche

1. Verfahren zur Charakterisierung einer Porosität einer Platte aus Aluminiumlegierung, die durch eine Oberfläche begrenzt ist, wobei das Verfahren die folgenden Schritte umfasst:
a) Anbringen einer Sonde (1) gegenüber der Platte (10), wobei die Sonde mindestens einen Wandler (2) umfasst, der so eingerichtet ist, dass er eine auf die Platte auftreffende Ultraschallwelle aussendet und eine in der Platte reflektierte Ultraschallwelle detektiert;
b) Aktivieren eines Wandlers der Sonde, des sogenannten Emissionswandlers (2), so dass der Emissionswandler eine auf die Platte auftreffende Ultraschallwelle aussendet;
c) Detektieren, durch einen Wandler einer Sonde, den sogenannten Detektionswandler (2), eines Detektionssignals, das eine von der Platte unter der Wirkung der auftreffenden Welle reflektierte Ultraschallwelle repräsentiert;
d) Wiederholen der Schritte a) bis c) durch Bewegen des Emissionswandlers (2) und des Detektionswandlers (2) entlang der Oberfläche der Platte in einem Netz, das mehrere Netzpunkte definiert;
e) anhand der in jedem Schritt c) detektierten Detektionssignale, Charakterisieren der Porosität der Platte (10);
- bei jedem Schritt b) wird die akustische Welle gemäß einer Fokustiefe unter der Oberfläche der Platte fokussiert (4), so dass sie bis zu einer Fokustiefe unter der Oberfläche konvergiert und ab der Fokustiefe abweicht; wobei die Fokustiefe zwischen 4 mm und 12 mm liegt;
wobei das Verfahren **dadurch gekennzeichnet ist, dass** der Schritt e) Folgendes umfasst:
- e-i) Berücksichtigen einer Mindestamplitude;
- e-ii) Auswählen der Detektionssignale, deren Amplitude größer als die Mindestamplitude ist;
- e-iii) Bestimmen des Vorhandenseins eines Fehlers (11), wenn mindestens ein Detektionssignal, das einem Punkt des Netzes entspricht, im Unterschritt e-ii) ausgewählt wurde, und wobei der Unterschritt e-iii) das Bestimmen des Vorhandenseins eines Fehlers umfasst, wenn mindestens zwei Detektionssignale, die zwei benachbarten Netzpunkten entsprechen, im Unterschritt e-ii) ausgewählt wurden.
- e-iv) an verschiedenen Punkten des Netzes, Berechnen eines Indikators für die Porositätsdichte, der einer bestimmten Anzahl von Fehlern pro Flächeneinheit entspricht;
- e-v) gegebenenfalls Bestimmen eines Indikators für die Gesamtporositätsdichte der Platte in Abhängigkeit von den im Unterschritt e-iv) berechneten Indikatoren für die Porositätsdichte.

2. Verfahren nach Anspruch 1, wobei der Emissionswandler und der Detektionswandler einen einzigen Wandler bilden.

3. Verfahren nach Anspruch 1 oder 2, umfassend:
- e-vi) Berücksichtigen einer Referenzanzahl, die größer als 2 ist;
- e-vii) Bestimmen des Vorhandenseins eines kritischen Fehlers vom Typ 1, wenn die Detektionssignale, die einer Anzahl von benachbarten Netzpunkten entsprechen, die größer oder gleich der Referenzanzahl ist, im Unterschritt e-ii) ausgewählt wurden;
- e-viii) Bestimmen eines kritischen Porositätsindikators vom Typ 1 in Abhängigkeit von der Anzahl der kritischen Fehler vom Typ 1, die sich aus dem Unterschritt e-vii) ergeben.

4. Verfahren nach einem der vorhergehenden Ansprüche, wobei Schritt e) Folgendes umfasst:
- e-ix) Berücksichtigen einer kritischen Amplitude;
- e-x) Auswählen der Detektionssignale, deren Amplitude größer als die kritische Amplitude ist;
- e-xi) Bestimmen des Vorhandenseins eines kritischen Fehlers vom Typ 2, wenn mindestens ein Detektionssignal, das einem Punkt des Netzes entspricht, während des Unterschritts e-x) ausgewählt wurde;
- e-xii) Bestimmen eines kritischen Porositätsindikators vom Typ 2 in Abhängigkeit von der Anzahl der kritischen Fehler vom Typ 2, die sich aus dem Unterschritt e-xi) ergeben.

5. Verfahren nach Anspruch 4, wobei der Unterschritt e-xi) das Bestimmen des Vorhandenseins eines kritischen Fehlers vom Typ 2 umfasst, wenn mindestens zwei Detektionssignale, die zwei benachbarten Netzpunkten entsprechen, während des Unterschritts e-x) ausgewählt wurden.

6. Verfahren nach den Ansprüchen 1 und 3 und 4, das das Bestimmen einer Übereinstimmung des Bauteils in Abhängigkeit von Folgendem umfasst:
- Indikatoren für die Porositätsdichte, die sich aus dem Unterschritt e-iv) ergeben, oder dem Indikator für die Gesamtporositätsdichte, der sich aus dem Unterschritt e-v) ergibt;
- und/oder dem kritischen Porositätsindikator vom Typ 1, der sich aus dem Unterschritt e-viii) ergibt;
- und/oder dem kritischen Porositätsindikator vom Typ 2, der sich aus dem Unterschritt e-xii) ergibt.

7. Verfahren nach einem der Ansprüche 4 bis 6, wobei die kritische Amplitude, die bei Schritt e-ix) berücksichtigt wird, größer ist als die minimale Amplitude, die bei Schritt e-i) berücksichtigt wird.

8. Verfahren nach einem der vorhergehenden Ansprüche, wobei der Durchmesser des Wandlers zwischen 100 µm und 500 µm liegt.

9. Verfahren nach einem der vorhergehenden Ansprüche, wobei die Frequenz der auftreffenden Welle zwischen 10 MHz und 20 MHz liegt.

10. Verfahren nach einem der vorhergehenden Ansprüche, wobei die Fokustiefe zwischen 4 und 8 mm und noch bevorzugter zwischen 5 und 7 mm liegt.

11. Verfahren nach einem der vorhergehenden Ansprüche, wobei das Netz zweidimensional ist.

## Claims

1. Method for characterizing the porosity of an aluminum alloy plate, delimited by a surface, the method including the steps of:
a) applying a probe (1) facing the plate (10), the probe including at least one transducer (2) configured to transmit an incident ultrasonic wave to the plate and detecting an ultrasonic wave reflected in the plate;
b) activating a transducer of the probe, known as a transmitting transducer (2), so that the transmitting transducer transmits an incident ultrasonic wave to the plate;
c) detecting, by a transducer of the probe, known as a detecting transducer (2), a detection signal representative of an ultrasonic wave reflected by the plate under the effect of the incident wave;
d) repeating steps a) to c) by moving the transmitting transducer (2) and the detecting transducer (2) along the surface of the plate, according to a mesh defining a plurality of mesh points;
e) from the detection signals detected in each step c), characterizing the porosity of the plate (10);
- during each step b), the acoustic wave is focused (4), according to a focusing depth below the surface of the plate, so as to converge at a focusing depth, below the surface, and diverge from the focusing depth; the focusing depth is between 4 mm and 12 mm
the method being **characterized in that** step e) includes:
- e-i) taking into account a minimum amplitude;
- e-ii) selecting the detection signals of which the amplitude is greater than the minimum amplitude;
- e-iii) determining the presence of a defect (11) when at least one detection signal, corresponding to a point of the mesh, is selected during sub-step e-ii), and wherein sub-step e-iii) includes determining the presence of a defect when at least two detection signals, corresponding to two adjacent mesh points, are selected during sub-step e-ii).
- e-iv) at various points of the mesh, calculating a porosity density indicator, corresponding to a number of defects determined per unit area;
- e-v) optionally determining an overall porosity density indicator for the plate based on the porosity density indicators calculated during sub-step e-iv).

2. Method according to claim 1, wherein the transmitting transducer and the detecting transducer form the same transducer.

3. Method according to claim 1 or 2, including:
- e-vi) taking into account a reference number greater than 2;
- e-vii) determining the presence of a type 1 critical defect when the detection signals corresponding to a number of adjacent mesh points, greater than or equal to the reference number, are selected during sub-step e-ii);
- e-viii) determining a type 1 critical porosity indicator based on the number of type 1 critical defects resulting from sub-step e-vii).

4. Method according to any one of the preceding claims, wherein step e) includes:
- e-ix) taking into account a critical amplitude;
- e-x) selecting the detection signals of which the amplitude is greater than the critical amplitude;
- e-xi) determining the presence of a type 2 critical defect when at least one detection signal corresponding to a point of the mesh is selected during sub-step e-x);
- e-xii) determining a type 2 critical porosity indicator based on the number of type 2 critical defects resulting from sub-step e-xi).

5. Method according to claim 4, wherein sub-step e-xi) includes determining the presence of a type 2 critical defect when at least two detection signals, corresponding to two adjacent mesh points, are selected during sub-step e-x).

6. Method according to claims 1 and 3 and 4, including determining a conformity of the part based on:
- porosity density indicators resulting from sub-step e-iv) or the overall porosity density indicator resulting from sub-step e-v);
- and/or the type 1 critical porosity indicator resulting from sub-step e-viii);
- and/or the type 2 critical porosity indicator resulting from sub-step e-xii).

7. Method according to any one of claims 4 to 6, wherein the critical amplitude, taken into account during step e-ix) is greater than the minimum amplitude taken into account during step e-i).

8. Method according to any one of the preceding claims, wherein the diameter of the transducer is between 100 µm and 500 µm.

9. Method according to any one of the preceding claims, wherein the frequency of the incident wave is between 10 MHz and 20 MHz.

10. Method according to any one of the preceding claims, wherein the focusing depth is between 4 and 8 mm, more preferably between 5 and 7 mm.

11. Method according to any one of the preceding claims wherein the mesh is two-dimensional.
